# EUROPEAN PATENT SPECIFICATION

(11) **EP 4 456 215 B1**
(45) Date of publication and mention of the grant of the patent: **31.12.2025**
(21) Application number: 24162398.2
(22) Date of filing: 08.03.2024
(51) Int. Cl.: H01M 8/04089, H01M 8/04119, H01M 8/04291, H01M 8/0438, H01M 8/04223, H01M 8/04746

(54) **FUEL CELL SYSTEM**
BRENNSTOFFZELLENSYSTEM
SYSTÈME DE PILE À COMBUSTIBLE

(30) Priority: 29.03.2023 JP 2023053751
(43) Date of publication of application: 30.10.2024
(60) Divisional application: 25172293.0
(73) Proprietor: TOYOTA JIDOSHA KABUSHIKI KAISHA, Toyota-shi, Aichi-ken, 471-8571 (JP)
(72) Inventor: OKUMURA, Makito, Toyota-shi, 471-8571 (JP); NAMBA, Ryouichi, Toyota-shi, 471-8571 (JP)
(74) Representative: J A Kemp LLP

(56) References cited:
- JP-B2- 5 351 651
- JP-B2- 6 613 744
- US-A1- 2019 217 846

## Description

### BACKGROUND OF THE INVENTION

### 1. Field of the Invention

The invention relates to a fuel cell system including a fuel cell stack.

### 2. Description of Related Art

For example, Japanese Unexamined Patent Application Publication No. 2022-062750 (JP 2022-062750 A) suggests a fuel cell system including a fuel cell stack to which hydrogen gas is supplied, as a technology of this type. The fuel cell system includes a circulating path through which hydrogen off-gas emitted from the fuel cell stack is circulated to the fuel cell stack as circulating gas. A gas-liquid separator is provided in the circulating path. The gas-liquid separator separates water (moisture) contained in circulating gas and stores the separated water. A drain valve that drains water stored in the gas-liquid separator to outside the circulating path is provided. When water stored in the gas-liquid separator is full, a controller opens the drain valve to drain the water stored in the gas-liquid separator.

US 2019/217846 A1 discloses a fuel cell system, a control method for a fuel cell system, and a computer program. JP 5 351651 B2 discloses a fuel cell system. JP6613744B2 also discloses a fuel cell system.

### SUMMARY OF THE INVENTION

Incidentally, in the fuel cell system suggested in JP 2022-062750 A, if impurities other than hydrogen gas increase in circulating gas, it is conceivable that the circulating gas is also released through the drain valve even when the amount of water stored in the gas-liquid separator is not full. However, if the drain valve has both the function to release gas and the function to drain water, the frequency of use of the drain valve increases. With the increase in the frequency of use of the drain valve, the frequency of replacement of the drain valve may also increase.

The invention provides a fuel cell system capable of improving the durability of a drain valve for draining water in a gas-liquid separator by reducing the frequency of use of the drain valve.

The invention provides a fuel cell system according to independent claim 1. Preferred embodiments are defined in the dependent claims. The fuel cell system includes: a fuel cell stack to which hydrogen gas is supplied; a circulating path configured to circulate hydrogen off-gas, emitted from the fuel cell stack, to the fuel cell stack as circulating gas; a gas-liquid separator provided in the circulating path, the gas-liquid separator being configured to separate water contained in the circulating gas from the circulating gas, the gas-liquid separator being configured to store the separated water; a drain valve configured to drain the water stored in the gas-liquid separator to outside the circulating path; an exhaust valve configured to release the circulating gas to outside the circulating path at a location downstream of the gas-liquid separator; and a controller configured to control opening and closing of the drain valve and opening and closing of the exhaust valve. The controller is configured to, when an amount of water stored in the gas-liquid separator is larger than or equal to a predetermined value, open the drain valve to drain, via the drain valve, the water stored in the gas-liquid separator, and, when a concentration of impurities contained in the circulating gas is higher than or equal to a predetermined value, open the exhaust valve to release, via the exhaust valve, the circulating gas circulating in the circulating path. The controller is further configured to, when the amount of water stored is larger than or equal to the predetermined value and the concentration of impurities is higher than or equal to the predetermined value, restrict opening of the exhaust valve and open the drain valve to drain, via the drain valve, the water stored in the gas-liquid separator and the circulating gas flowing into the gas-liquid separator to outside the circulating path.

According to the aspect of the invention, hydrogen gas is supplied to the fuel cell stack as fuel gas, a fuel cell that is a component of the fuel cell stack is caused to generate electric power and produce water, and off-gas containing the produced water (moisture) is emitted from the fuel cell stack. Since the off-gas contains hydrogen gas, the off-gas is flowed through the circulating path as circulating gas. The off-gas contains produced water (moisture). Since the gas-liquid separator is provided in the circulating path, it is possible to separate water (moisture) from the circulating gas and store the separated water in the gas-liquid separator. Here, the controller opens the drain valve when the amount of water stored in the gas-liquid separator is larger than or equal to the predetermined value, so it is possible to drain the water stored in the gas-liquid separator via the drain valve.

Furthermore, vapor not separated in the gas-liquid separator and part of oxidant gas (air) at a cathode side of the fuel cell stack permeate through the fuel cell stack and are contained in circulating gas as impurities. Therefore, the controller is capable of, when the concentration of impurities contained in the circulating gas is higher than or equal to the predetermined value, open the exhaust valve to release, via the exhaust valve, the circulating gas circulating in the circulating path together with impurities. In this way, water in the gas-liquid separator is drained with the drain valve, and circulating gas in the circulating path is released with the exhaust valve, so it is possible to reduce the frequency of use of the drain valve connected to the gas-liquid separator and improve the durability of the drain valve.

According to the invention, it is possible to restrict opening of the exhaust valve and drain, via the drain valve, the water stored in the gas-liquid separator and the circulating gas flowing into the gas-liquid separator together to outside the circulating path. Thus, it is possible to reduce excessive release of circulating gas by opening the drain valve and opening the exhaust valve.

In the above aspect, the controller may be configured to, for a certain period of time just before the amount of water stored in the gas-liquid separator reaches the predetermined value, open the exhaust valve and measure a pressure reduction rate of the circulating gas circulating in the circulating path, set a reference pressure reduction rate that is a reference for time to close the drain valve based on the pressure reduction rate, after the drain valve is opened when the amount of water stored is larger than or equal to the predetermined value, measure the pressure reduction rate of the circulating gas circulating in the circulating path, and close the drain valve at time when the pressure reduction rate measured in a state where the drain valve is open reaches the reference pressure reduction rate.

According to this aspect, via the drain valve, the water stored in the gas-liquid separator is drained and then the circulating gas in the circulating path is released. Therefore, for a certain period of time just before the amount of water stored in the gas-liquid separator reaches the predetermined value, the controller opens the exhaust valve and measures a pressure reduction rate of the circulating gas circulating in the circulating path. The controller sets a reference pressure reduction rate that is a reference for time to close the drain valve based on the pressure reduction rate, so a reduction rate that changes according to an operating status of the fuel cell system and that is a reference for circulating gas to be released when the drain valve is open can be obtained. After the drain valve is opened, the controller measures a pressure reduction rate of the circulating gas circulating in the circulating path, and is allowed to determine that the circulating gas is being released through the drain valve at time when the measured pressure reduction rate reaches the reference pressure reduction rate. Therefore, the drain valve is closed at this time, so it is possible to reduce excessive release of circulating gas via the drain valve.

In the above aspect, the fuel cell system may further include a circulating pump provided in the circulating path and configured to circulate the circulating gas to the fuel cell stack. The controller may be configured to, when an electric power consumed by the circulating pump is higher than or equal to a predetermined value, open the exhaust valve to release, via the exhaust valve, the circulating gas and water contained in the circulating gas to outside the circulating path.

According to this aspect, when the electric power consumed by the circulating pump is higher than or equal to the predetermined value, it may be determined to be in a situation that the water stored in the gas-liquid separator cannot be drained with the drain valve. Thus, there is a possibility that the driving resistance of the circulating pump increases as a result of entry of water into the circulating pump and the entered water is supplied from the circulating pump to the fuel cell stack. If excessive water enters the fuel cell stack, the power generation efficiency of the fuel cell may decrease. Therefore, according to this aspect, the controller opens the exhaust valve to release, via the exhaust valve, the circulating gas and water (moisture) contained in the circulating gas to outside the circulating path.

Furthermore, in the above configuration, the controller may be configured to increase a pressure of hydrogen gas supplied to the fuel cell stack in a state where the exhaust valve is open. According to this aspect, it is possible to release circulating gas and water (moisture) contained in the circulating gas through the exhaust valve and add fresh hydrogen gas to the circulating gas by increasing the pressure of hydrogen gas supplied to the fuel cell stack.

According to the aspect of the invention, it is possible to improve the durability of a drain valve for draining water in a gas-liquid separator by reducing the frequency of use of the drain valve.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a block diagram of a fuel cell system according to a first embodiment;
FIG. 2 is a control flowchart of the fuel cell system shown in FIG. 1;
FIG. 3 is a control flowchart of a fuel cell system according to a second embodiment;
FIG. 4 is a timing chart associated with the control flowchart shown in FIG. 3; and
FIG. 5 is a control flowchart of a fuel cell system according to a third embodiment.

### DETAILED DESCRIPTION OF EMBODIMENTS

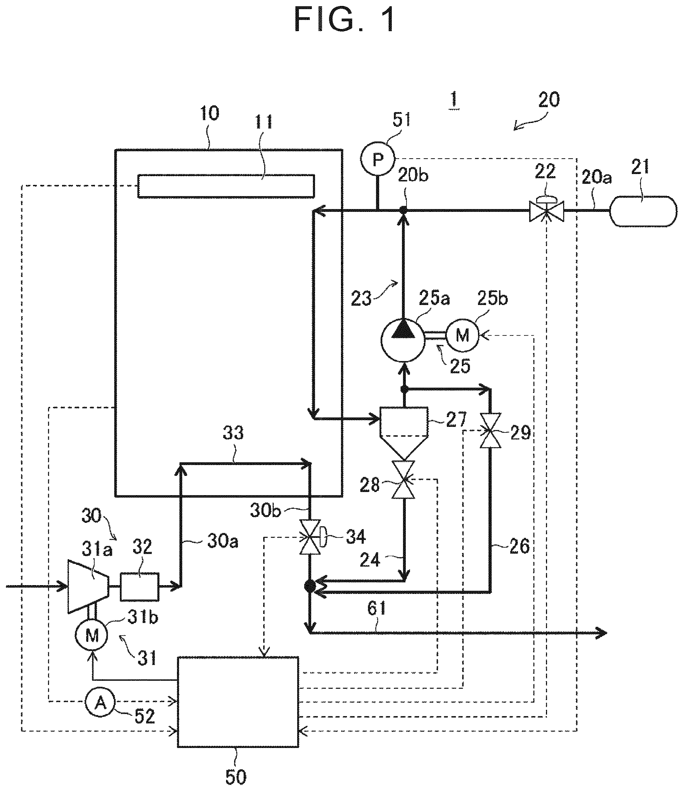

Hereinafter, fuel cell systems according to first to third embodiments will be described with reference to FIG. 1 to FIG. 5. Initially, the basic configuration of the fuel cell systems according to these embodiments will be described.

### First Embodiment

A fuel cell system 1 includes a fuel cell stack 10, a fuel gas line 20, an oxidant gas line 30, a controller 50, other measurement hardware, and the like. The fuel cell stack 10 is a system of a polymer electrolyte fuel cell. However, not limited to a polymer electrolyte fuel cell, fuel cells of other types, such as a solid oxide fuel cell, may be adopted. The fuel cell stack 10 has a stack structure in which a plurality of single cells is stacked. The fuel cell stack 10 generates electric power upon receiving fuel gas containing hydrogen and oxidant gas containing oxygen.

In the present embodiment, the fuel cell stack 10 is supplied with hydrogen gas and air and generates electric power. When the fuel cell stack 10 generates electric power from hydrogen gas and air, produced water is produced and drained.

Each single cell of the fuel cell stack 10 has a channel through which hydrogen gas serving as fuel gas flows and which is provided on an anode side (anode-side channel), and a channel through which air serving as oxidant gas flows and which is provided on a cathode side (cathode-side channel). The anode-side channel and the cathode-side channel are provided with an electrolyte membrane interposed therebetween. Although not shown in the drawing, a refrigerant channel through which refrigerant for cooling the inside of the fuel cell stack 10 is formed in the fuel cell stack 10.

The fuel gas line 20 is a path for supplying hydrogen gas to the fuel cell stack 10. The fuel gas line 20 includes at least a supply path 20a, a circulating path 23, a drain path 24, and an exhaust path 26. The fuel gas line 20 is connected to a tank 21. An injector 22, a circulating pump 25, a gas-liquid separator 27, a drain valve 28, an exhaust valve 29, and the like are provided in the fuel gas line 20.

The tank 21 is a high-pressure tank filled with hydrogen gas serving as fuel gas. The supply path 20a connects the tank 21 with the circulating path 23 (described later). The injector 22 is provided in the supply path 20a. The injector 22 adjusts the pressure and flow rate of hydrogen gas supplied to the fuel cell stack 10 in accordance with a control signal from the controller 50.

The circulating path 23 is a path through which hydrogen gas emitted from the fuel cell stack 10 (hydrogen off-gas) is circulated to the fuel cell stack 10 as circulating gas. The circulating path 23 is connected to the supply path 20a such that hydrogen off-gas merges with hydrogen gas from the supply path 20a. Thus, circulating gas (hydrogen off-gas) having passed through the circulating path 23 is supplied again to the fuel cell stack 10, and hydrogen gas from the supply path 20a is added to the circulating gas serving as fuel gas.

A pressure sensor 51 is installed between a confluence point 20b and the fuel cell stack 10. At the confluence point 20b, the circulating path 23 and the supply path 20a merge with each other. Thus, it is possible to measure the pressure of mixed gas with the pressure sensor 51. The mixed gas is a mixture of hydrogen gas supplied from the supply path 20a and circulating gas (hydrogen off-gas). A measured pressure (measured data) of the pressure sensor 51 is sent to the controller 50. The controller 50 calculates the partial pressure of circulating gas contained in the mixed gas and also calculates the partial pressure of impurities contained in the circulating gas, from the received measured pressure of the pressure sensor 51.

Here, the partial pressure of circulating gas contained in the mixed gas can be calculated from the measured pressure of the pressure sensor 51 and the supply pressure of hydrogen gas (supply gas) supplied from the injector 22. Furthermore, air is mixed into circulating gas from a cathode side, and vapor generated during power generation is also mixed into circulating gas. When the fuel cell stack 10 is continuously used, air and vapor mixed into circulating gas increase. Air and vapor contained in circulating gas are impurities for fuel gas. Therefore, the controller 50 can calculate the partial pressure of impurities contained in circulating gas from a temporal change in the calculated partial pressure of circulating gas. The controller 50 calculates the concentration (for example, a concentration in percent by volume or ppm) of impurities contained in circulating gas, from the partial pressure of impurities contained in circulating gas.

A calculation method for the concentration of impurities contained in circulating gas is a generally known method. As long as it is possible to determine the concentration of impurities contained in circulating gas, the calculation method is not limited to the above-described method. For example, the concentration of impurities contained in circulating gas may be directly measured. Other than the above methods, for example, a relationship between a power generation time and amount of electric power generated of a fuel cell stack and a concentration of impurities contained in circulating gas may be measured in advance, and the concentration of impurities contained in circulating gas may be estimated from a power generation time and amount of electric power generated of the fuel cell stack based on the measured results.

The gas-liquid separator 27 is provided in the circulating path 23. The gas-liquid separator 27 separates water (moisture) contained in circulating gas from circulating gas and stores the separated water (moisture). The drain valve 28 is connected to the gas-liquid separator 27. The drain valve 28 is an open-close valve. Opening and closing of the drain valve 28 are controlled by the controller 50 (described later). When the drain valve 28 is open, water stored in the gas-liquid separator 27 is drained to the drain path 24 outside the circulating path 23. The drain path 24 is connected to an exhaust and drain path 61. Water and the like in the drain path 24 are drained to outside the fuel cell system 1 through the exhaust and drain path 61.

On the other hand, hydrogen off-gas (off-gas) contains hydrogen gas not consumed in power generation. Hydrogen off-gas from which water (moisture) is separated in the gas-liquid separator 27 circulates through the circulating path 23 by the circulating pump 25. In the present embodiment, hydrogen off-gas (circulating gas) having passed through the gas-liquid separator 27 contains hydrogen gas and other impurities (nitrogen gas, vapor, and the like). Therefore, as the concentration of impurities contained in circulating gas increases, it is desirable to release circulating gas together with impurities.

In the present embodiment, the exhaust valve 29 is provided in the fuel gas line 20. The exhaust valve 29 is an open-close valve. Opening and closing of the exhaust valve 29 are controlled by the controller 50 (described later). When the exhaust valve 29 is open, circulating gas is released to the exhaust path 26 outside the circulating path 23 at a location downstream of the gas-liquid separator 27. Specifically, the exhaust path 26 branches off from the circulating path 23 between the gas-liquid separator 27 and the circulating pump 25, and the exhaust valve 29 is provided in the exhaust path 26. In the present embodiment, the exhaust valve 29 is provided in the exhaust path 26. Alternatively, for example, the exhaust valve 29 that is a three-way valve may be provided at a branch point between the circulating path 23 and the exhaust path 26. The exhaust path 26 is connected to the exhaust and drain path 61. Circulating gas and the like in the exhaust path 26 are released to outside the fuel cell system 1 through the exhaust and drain path 61.

The circulating pump 25 is provided in the circulating path 23. The circulating pump 25 includes a pump body 25a disposed downstream of the gas-liquid separator 27, and a motor 25b that drives the pump body 25a. It is possible to circulate circulating gas through the circulating path 23 by driving the motor 25b in accordance with a control signal from the controller 50. An ammeter (not shown) is attached to the motor 25b. A current value measured with the ammeter is sent to the controller 50. Thus, the controller 50 can measure an electric power consumed by the circulating pump 25.

The oxidant gas line 30 is a path for supplying air containing oxygen to the fuel cell stack 10. The oxidant gas line 30 includes at least a supply path 30a and an exhaust path 30b. The supply path 30a is a channel for supplying air containing oxygen gas to the fuel cell stack 10. At least an air compressor 31 and an intercooler 32 are provided in the supply path 30a.

The air compressor 31 discharges air to the fuel cell stack 10, and supplies the fuel cell stack 10 with the discharged air via the intercooler 32. In the air compressor 31, a motor 31b is connected to a body 31a. The motor 31b is driven in accordance with a control signal from the controller 50. The intercooler 32 cools air compressed into a high temperature (a temperature exceeding 100°C) by the air compressor 31.

The exhaust path 30b is a channel through which oxygen off-gas consumed by the fuel cell stack 10 is emitted. A pressure regulating valve 34 is provided in the exhaust path 30b. Furthermore, a mist separator or the like that collects water (moisture) in oxygen off-gas may be provided in the exhaust path 30b.

The fuel cell system 1 includes the fuel cell stack 10, and the controller 50 that controls the above-described devices. The controller 50 is a microcomputer and includes a CPU, a ROM, a RAM, and input and output ports. The controller 50 may control a motor drive unit, a battery, and the like other than these devices. The fuel cell system 1 further includes a cell monitor 11 that monitors the voltages of single cells of the fuel cell stack 10 and an ammeter 52 that measures a current value output from the fuel cell stack 10. The controller 50 receives the voltages (measured values) of the single cells from the cell monitor 11 and receives a current (measured value) generated by the fuel cell stack 10 from the ammeter 52.

In the first embodiment, when the amount of water stored in the gas-liquid separator 27 is larger than or equal to a predetermined value, the controller 50 opens the drain valve 28 to drain the water stored in the gas-liquid separator 27. On the other hand, when the concentration of impurities contained in circulating gas is higher than or equal to a predetermined value, the controller 50 opens the exhaust valve 29 to release the circulating gas circulating in the circulating path 23. However, when the amount of water stored in the gas-liquid separator 27 is larger than or equal to the predetermined value and the concentration of impurities contained in circulating gas is higher than or equal to the predetermined value, the controller 50 restricts opening of the exhaust valve 29 and opens the drain valve 28. Thus, the controller 50 drains, via the drain valve 28, the water stored in the gas-liquid separator 27 and the circulating gas flowing into the gas-liquid separator 27.

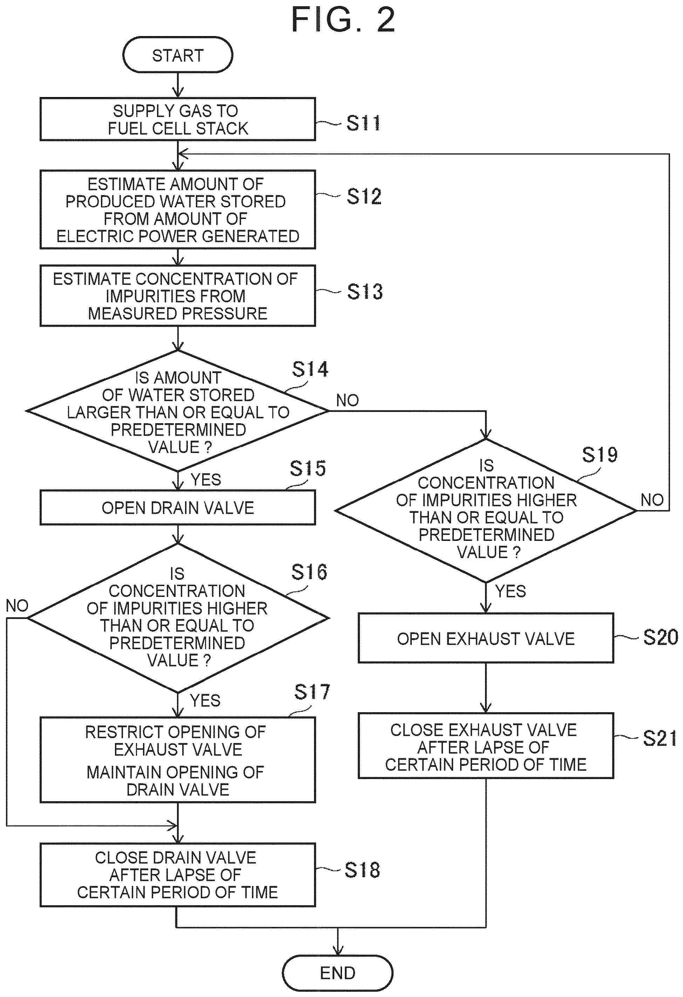

Control operations by the controller 50 that performs such a series of operations will be described with reference to FIG. 2. FIG. 2 is a control flowchart of the fuel cell system 1 shown in FIG. 1.

Initially, in step S11, the controller 50 drives the injector 22 and the circulating pump 25, supplies hydrogen gas with a controlled flow rate and a controlled pressure to the fuel cell stack 10, and circulates hydrogen off-gas, emitted from the fuel cell stack 10, through the circulating path 23. At the same time, the controller 50 controls driving of the air compressor 31 and supplies air to the fuel cell stack 10. Thus, the fuel cell stack 10 is supplied with hydrogen gas and air to start generating electric power.

Subsequently, in step S12, the controller 50 calculates the amount of electric power generated by the fuel cell stack 10 from a current value measured by the ammeter 52 and calculates the amount of water (produced water) produced in the fuel cell stack 10 from the calculated amount of electric power generated. The controller 50 estimates the amount of produced water stored in the gas-liquid separator 27 from the calculated amount of produced water. In the present embodiment, the amount of produced water stored in the gas-liquid separator 27 is estimated. Alternatively, for example, a water level sensor or the like may be attached to the gas-liquid separator 27, and the amount of produced water stored in the gas-liquid separator 27 may be measured.

In step S13, the controller 50 estimates the concentration of impurities contained in circulating gas from a pressure value measured by the pressure sensor 51. Estimation of the types of impurities and the concentration of impurities is as described above.

In step S14, the controller 50 determines whether the amount of water in the gas-liquid separator 27, estimated in step S12, is larger than or equal to the predetermined value. When the amount of water in the gas-liquid separator 27 is larger than or equal to the predetermined value (in the case of YES), the process proceeds to step S15. The predetermined value (predetermined amount) is an amount by which the amount of water in the gas-liquid separator 27 is full or an amount close to that. In step S15, the controller 50 opens the drain valve 28 to drain the water stored in the gas-liquid separator 27.

In step S16, the controller 50 determines whether the concentration of impurities contained in circulating gas is higher than or equal to the predetermined value. The predetermined value is a value at or above which power generation efficiency may decrease due to circulating gas and that depends on the power generation performance and the like of the fuel cell stack 10. When the concentration of impurities contained in the circulating gas is higher than or equal to the predetermined value (in the case of YES), the process proceeds to step S17. In step S17, the controller 50 restricts opening of the exhaust valve 29 and maintains opening of the drain valve 28, and the process proceeds to step S18. Here, restricting opening of the exhaust valve 29 is to maintain a closed state of the exhaust valve 29.

In step S18, the controller 50 drains the water in the gas-liquid separator 27 via the drain valve 28 until the water stored in the gas-liquid separator 27 is smaller than or equal to a predetermined amount (substantially zero) and continuously releases circulating gas in the circulating path 23 until the concentration of impurities contained in the circulating gas is lower than or equal to a predetermined concentration. Specifically, a period of time (certain period of time Ta) in which drain of water and circulating gas with the drain valve 28 completes is set in advance in the controller 50. The controller 50 closes the drain valve 28 after a lapse of the certain period of time Ta.

When the concentration of impurities contained in circulating gas is lower than the predetermined value in step S16 (in the case of NO), the process proceeds to step S18. In step S18, the controller 50 drains, via the drain valve 28, the water stored in the gas-liquid separator 27 until the water stored in the gas-liquid separator 27 is smaller than or equal to the predetermined amount (substantially zero). Specifically, a period of time (certain period of time Tb) in which drain of water with the drain valve 28 completes is set in advance in the controller 50. The controller 50 closes the drain valve 28 after a lapse of the certain period of time Tb. The above-described certain period of time Ta is longer than the certain period of time Tb by the length of time circulating gas in the circulating path 23 is released.

On the other hand, when the amount of water in the gas-liquid separator 27 is smaller than the predetermined value in step S14 (in the case of NO), the process proceeds to step S19. In step S19, the controller 50 determines whether the concentration of impurities contained in circulating gas is higher than or equal to the predetermined value. When the concentration of impurities contained in circulating gas is higher than or equal to the predetermined value (in the case of YES), the process proceeds to step S20. In step S20, the controller 50 opens the exhaust valve 29 to release, via the exhaust valve 29, the circulating gas circulating in the circulating path 23.

In step S21, the controller 50 releases the circulating gas in the circulating path 23 via the exhaust valve 29 until the concentration of impurities contained in circulating gas is lower than or equal to the predetermined concentration. Specifically, a period of time (certain period of time Tc) in which such a release of circulating gas completes is set in advance in the controller 50. The controller 50 closes the exhaust valve 29 after a lapse of the certain period of time Tc. The above-described certain period of time Ta is longer than the certain period of time Tc by the length of time water stored in the gas-liquid separator 27 is drained. When the flow rate of circulating gas passing through the drain valve 28 and the flow rate of circulating gas passing through the exhaust valve 29 are substantially the same, the certain periods of time Tb, Tc for releasing circulating gas are set to substantially the same values. When the concentration of impurities contained in circulating gas is lower than the predetermined value in step S19 (in the case of NO), the process returns to step S12.

According to the present embodiment, single cells that are components of the fuel cell stack 10 generate electric power and produce water (produced water), and hydrogen off-gas (off-gas) containing produced water is emitted from the fuel cell stack 10. Since hydrogen off-gas contains hydrogen gas not consumed in power generation, hydrogen off-gas is flowed through the circulating path 23 as circulating gas. The hydrogen off-gas contains produced water (moisture). Since the gas-liquid separator 27 is provided in the circulating path 23, it is possible to separate water (moisture) from hydrogen off-gas and store the separated water in the gas-liquid separator 27. Here, the controller 50 opens the drain valve 28 when the amount of water stored in the gas-liquid separator 27 is larger than or equal to the predetermined value, so it is possible to drain the water stored in the gas-liquid separator 27 via the drain valve 28.

Furthermore, vapor not separated in the gas-liquid separator 27 and part of oxidant gas (air) at the cathode side of the fuel cell stack 10 permeate through the single cells and are contained in circulating gas as impurities. Therefore, since the controller 50 opens the exhaust valve 29 when the concentration of impurities contained in circulating gas is higher than or equal to the predetermined value, circulating gas circulating in the circulating path 23 can be released via the exhaust valve 29 together with impurities. In this way, water in the gas-liquid separator 27 is drained with the drain valve 28, and circulating gas in the circulating path 23 is released with the exhaust valve 29, so it is possible to reduce the frequency of use of the drain valve 28 connected to the gas-liquid separator 27 and improve the durability of the drain valve 28.

In step S17, opening of the exhaust valve 29 can be restricted, and water stored in the gas-liquid separator 27 and circulating gas passing through the gas-liquid separator 27 can be drained to outside the circulating path 23 via the drain valve 28. Thus, it is possible to reduce excessive release of circulating gas from the circulating path 23 by opening the drain valve 28 and opening the exhaust valve 29.

### Second Embodiment

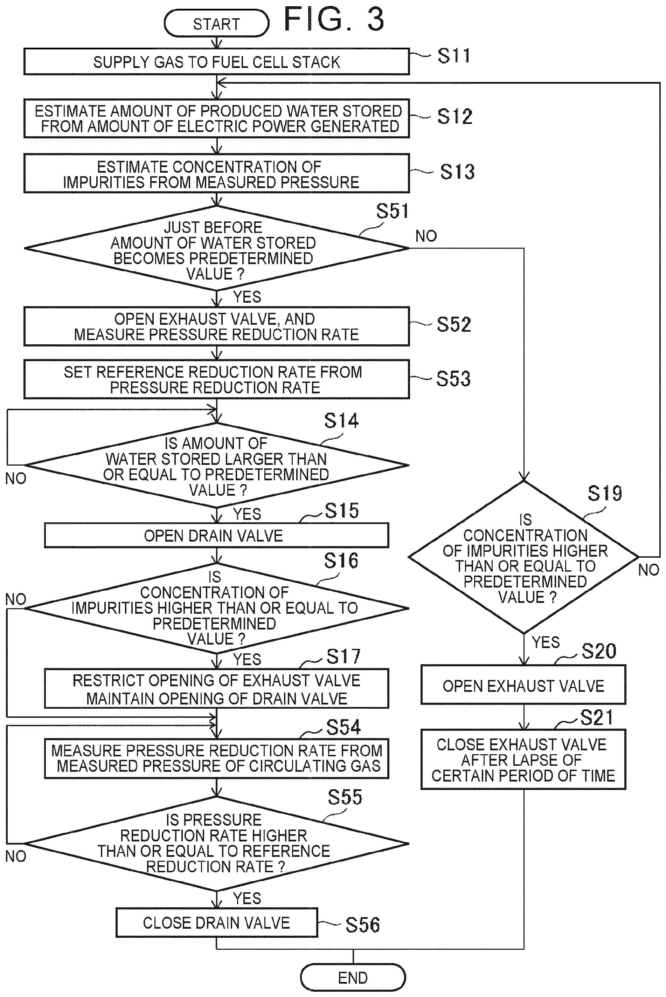

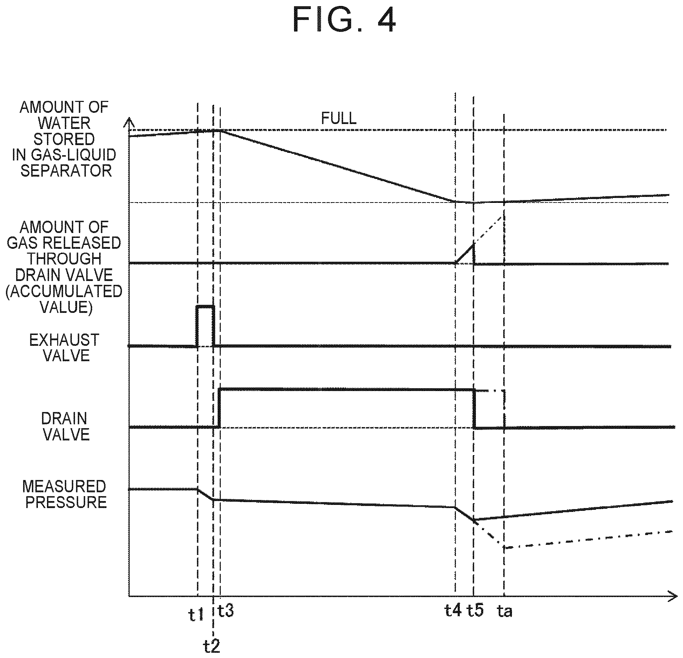

Hereinafter, the fuel cell system 1 according to the second embodiment will be described with reference to FIG. 3 and FIG. 4. FIG. 3 is a control flowchart of the fuel cell system according to the second embodiment. FIG. 4 is a timing chart associated with the control flowchart shown in FIG. 3. The fuel cell system 1 according to the second embodiment differs from that of the first embodiment in control operations of the controller 50. Therefore, only control operations by the controller 50 according to the second embodiment will be described. However, like step numbers are assigned to the same control operations as those of the first embodiment, and the detailed description is omitted.

In the present embodiment, the controller 50 opens the exhaust valve 29 for a certain period of time just before the amount of water stored in the gas-liquid separator 27 reaches the predetermined value. Subsequently, the controller 50 measures a pressure reduction rate of circulating gas circulating in the circulating path 23 and sets a reference pressure reduction rate that is a reference for time to close the drain valve 28 based on the pressure reduction rate. Subsequently, the controller 50 opens the drain valve 28 when the amount of water stored is larger than or equal to the predetermined value, and then measures a pressure reduction rate of circulating gas circulating in the circulating path 23. Finally, the controller 50 closes the drain valve 28 at time when the pressure reduction rate measured in a state where the drain valve 28 is open reaches the reference pressure reduction rate.

Control operations by the controller 50 that performs such a series of operations will be described with reference to FIG. 3. FIG. 3 is a control flowchart of the fuel cell system 1 shown in FIG. 1. Initially, step S11 to step S13 are the same as those of the first embodiment. Subsequently, in step S51, the controller 50 determines whether it is time just before the amount of water stored in the gas-liquid separator 27 becomes the predetermined value (specifically, just before the amount of water reaches a full level). Here, the phrase "just before" means a certain period of time (a certain period of time set in advance) before the amount of water stored becomes the predetermined value. When the amount of water stored in the gas-liquid separator 27 is not time just before the amount of water stored becomes the predetermined value (in the case of NO), the controller 50 executes control operations of step S19 to step S21 as in the case of the first embodiment.

When it is time just before the amount of water in the gas-liquid separator 27 becomes the predetermined value (in the case of YES), the time corresponds to time t1 in the timing chart shown in FIG. 4. In this case, the process proceeds to step S52. In step S52, the controller 50 opens the exhaust valve 29 only for a certain period of time set in advance and measures the pressure reduction rate of circulating gas circulating in the circulating path 23. In the present embodiment, only for a certain period of time set in advance from time t1 in the timing chart shown in FIG. 4 to time t2 at which the amount of water in the gas-liquid separator 27 is full, the controller 50 opens the exhaust valve 29. Circulating gas is released through the exhaust valve 29 from time t1 to time t2, so the pressure of circulating gas reduces, and the measured pressure (measured value) of the pressure sensor 51 reduces. Therefore, the controller 50 calculates a reduction rate of measured pressure from time t1 to time t2 as the pressure reduction rate of circulating gas.

In step S53, the controller 50 sets a reference pressure reduction rate that is a reference for time to close the drain valve 28 based on the pressure reduction rate. When the drain valve 28 is open, the stored water is drained from the gas-liquid separator 27 via the drain valve 28, and, when almost the entire water is drained, circulating gas flowing into the gas-liquid separator 27 is released. At this time, the pressure of circulating gas reduces, and the measured pressure (measured value) of the pressure sensor 51 reduces. The pressure reduction rate depends on the pressure of circulating gas, so, in step S53, just after time t2, the reference pressure reduction rate of the drain valve 28 is set at a time just before the drain valve 28 is opened, from the pressure reduction rate when the exhaust valve 29 is open.

Here, when the exhaust valve 29 and the drain valve 28 are valves having the same structure, the controller 50 sets the reference pressure reduction rate to the same rate as the pressure reduction rate. On the other hand, when the exhaust valve 29 and the drain valve 28 are valves having different structures, the flow rate at which circulating gas is released is different, so a value obtained by multiplying the pressure reduction rate by a coefficient according to the flow rate ratio is set for the reference pressure reduction rate.

Subsequently, the process proceeds to step S14. The controller 50 determines whether the amount of water in the gas-liquid separator 27, estimated in step S12, is larger than or equal to the predetermined value. The predetermined value (predetermined amount) is an amount by which the amount of water in the gas-liquid separator 27 is full or an amount close to that. When the amount of water in the gas-liquid separator 27 is smaller than the predetermined value (in the case of NO), the process repeats step S14. When the amount of water in the gas-liquid separator 27 is larger than or equal to the predetermined value (in the case of YES), the controller 50 opens the drain valve 28 at time t3 in FIG. 4 to drain the water stored in the gas-liquid separator 27 in step S15 as in the case of the first embodiment.

Subsequently, as in the case of the first embodiment, step S16 and step S17 are sequentially performed, and the process proceeds to step S54. In step S54, the pressure reduction rate of circulating gas circulating in the circulating path 23 is measured with the pressure sensor 51. As shown in FIG. 4, during a period from time t3 to time t4 when only water stored in the gas-liquid separator 27 is being drained in a state where the drain valve 28 is open, the measured pressure of the pressure sensor 51 almost remains unchanged. However, after time t4, circulating gas flowing into the gas-liquid separator 27 is also released through the drain valve 28. Therefore, at time t4, the measured pressure of circulating gas, measured with the pressure sensor 51, reduces.

In step S55, the controller 50 determines whether the pressure reduction rate measured in a state where the drain valve 28 is open is higher than or equal to the reference pressure reduction rate. When the controller 50 determines that the pressure reduction rate is lower than the reference pressure reduction rate (in the case of NO), the process returns to step S54. On the other hand, when the controller 50 determines that the pressure reduction rate is higher than or equal to the reference pressure reduction rate (in the case of YES), the measured pressure reduction rate reaches the reference pressure reduction rate, and circulating gas is being released through the drain valve 28. Therefore, in step S56, the controller 50 closes the drain valve 28 at this time (time t5).

According to the present embodiment, just before the drain valve 28 is opened, the pressure reduction rate when the exhaust valve 29 is open is measured, and the reference pressure reduction rate that is a reference for time to close the drain valve 28 is set. Therefore, a pressure reduction rate that changes according to an operating status of the fuel cell system 1 and that is a reference for circulating gas to be released when the drain valve 28 is open is obtained.

The controller 50 opens the drain valve 28 and then measures the pressure reduction rate of circulating gas circulating in the circulating path 23. At time when the measured pressure reduction rate reaches the reference pressure reduction rate, it may be determined that drain of water from the gas-liquid separator 27 is complete and circulating gas is being released through the drain valve 28. Therefore, the controller 50 closes the drain valve 28 at this time, so it is possible to reduce excessive release of circulating gas via the drain valve 28. Different from the second embodiment, it is conceivable that, as shown in FIG. 4, valve closing timing is set such that the drain valve 28 is closed at time ta after a lapse of a period of time set in advance from when the drain valve 28 is opened (time t3). In this case, as indicated by the alternate long and short dashed line in FIG. 4, circulating gas may be excessively released through the drain valve 28.

### Third Embodiment

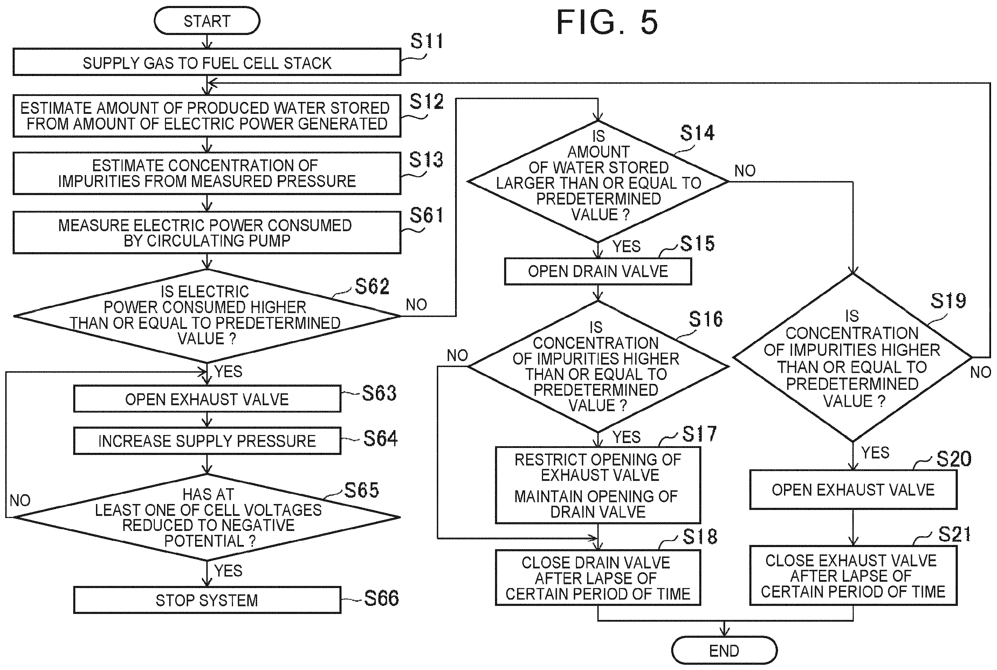

Hereinafter, the fuel cell system 1 according to the third embodiment will be described with reference to FIG. 5. FIG. 5 is a control flowchart of the fuel cell system according to the third embodiment. The fuel cell system 1 according to the third embodiment differs from that of the first embodiment in control operations of the controller 50. Therefore, only control operations by the controller 50 according to the third embodiment will be described. However, like step numbers are assigned to the same control operations as those of the first embodiment, and the detailed description is omitted.

When an electric power consumed by the circulating pump 25 is higher than or equal to a predetermined value, the controller 50 opens the exhaust valve 29 to release, via the exhaust valve 29, circulating gas and water (moisture) contained in the circulating gas to outside the circulating path 23. Furthermore, in a state where the exhaust valve 29 is open, the controller 50 increases the pressure of hydrogen gas supplied to the fuel cell stack 10.

Control operations by the controller 50 that performs such a series of operations will be described with reference to FIG. 5. Initially, step S11 to step S13 are the same as those of the first embodiment. Subsequently, in step S61, the controller 50 measures an electric power consumed by the circulating pump 25 from a current value of the motor 25b of the circulating pump 25. In step S62, the controller 50 determines whether the electric power consumed by the circulating pump 25 is higher than or equal to the predetermined value. The predetermined value is set to an upper limit of a range of electric power consumed (calculated value) at the time when circulating gas is fed by the circulating pump 25 under pressure. Here, when the controller 50 determines in step S62 that the electric power consumed by the circulating pump 25 is lower than the predetermined value (in the case of NO), the controller 50 executes control operations of step S14 to step S21 as in the case of the first embodiment.

On the other hand, when the controller 50 determines in step S62 that the electric power consumed by the circulating pump 25 is higher than or equal to the predetermined value (in the case of YES), it is estimated that water is engaged with the circulating pump 25 and a load on the motor 25b is increased. This is presumably because, even when the water stored in the gas-liquid separator 27 is full, the water is not drained due to failure or the like of the drain valve 28, and the water flows into the circulating pump 25. Therefore, in this case, the process proceeds to step S63, and the controller 50 opens the exhaust valve 29. Thus, circulating gas and water (moisture) contained in the circulating gas are released to outside the circulating path 23 (exhaust path 26) via the exhaust valve 29.

In a state where the exhaust valve 29 is open, the process proceeds to step S64. In step S64, the controller 50 increases the pressure of hydrogen gas supplied to the fuel cell stack 10 such that the pressure of circulating gas, reduced as a result of release of circulating gas through the exhaust valve 29, is compensated. Specifically, the controller 50 controls the injector 22 such that the pressure of hydrogen gas supplied from the supply path 20a increases.

In step S65, the controller 50 determines whether at least one of the cell voltages has reduced to a negative potential by using the cell monitor 11. Here, when the controller 50 determines that no cell voltage has reduced to a negative potential (in the case of NO), the process returns to step S63. On the other hand, when the controller 50 determines that at least one of the cell voltages has reduced to a negative potential (in the case of YES), the fuel cell stack 10 is in an abnormal state where water not drained flows into the fuel cell stack 10 via the circulating pump 25, and the corresponding cell cannot generate electric power. In this case, the process proceeds to step S66, and power generation of the fuel cell system 1 is stopped (the system is stopped).

In the present embodiment, when the electric power consumed by the circulating pump 25 is higher than or equal to the predetermined value, it may be determined that the water stored in the gas-liquid separator 27 cannot be drained with the drain valve 28. In this state, water may enter the circulating pump 25, and the entered water may be supplied to the fuel cell stack 10. If excessive water enters the fuel cell stack 10, the power generation efficiency of the single cells may decrease. Therefore, the controller 50 opens the exhaust valve 29, so it is possible to release, via the exhaust valve 29, circulating gas and water (moisture) contained in the circulating gas to outside the circulating path 23. Furthermore, it is possible to release circulating gas and water (moisture) contained in the circulating gas through the exhaust valve 29 and add fresh hydrogen gas to the circulating gas by increasing the pressure of hydrogen gas supplied to the fuel cell stack 10.

## Claims

1. A fuel cell system (1) comprising:
a fuel cell stack (10) to which hydrogen gas is supplied;
a circulating path (23) configured to circulate hydrogen off-gas, emitted from the fuel cell stack (10), to the fuel cell stack (10) as circulating gas;
a gas-liquid separator (27) provided in the circulating path (23), the gas-liquid separator (27) being configured to separate water contained in the circulating gas from the circulating gas, the gas-liquid separator (27) being configured to store the separated water;
a drain valve (28) configured to drain the water stored in the gas-liquid separator (27) to outside the circulating path (23);
an exhaust valve (29) configured to release the circulating gas to outside the circulating path (23) at a location downstream of the gas-liquid separator (27); and
a controller (50) configured to control opening and closing of the drain valve (28) and opening and closing of the exhaust valve (29), wherein the controller (50) is configured to, when an amount of water stored in the gas-liquid separator (27) is larger than or equal to a predetermined value, open the drain valve (28) to drain, via the drain valve (28), the water stored in the gas-liquid separator (27),
**characterised in that** the controller (50) is further configured to:
when a concentration of impurities contained in the circulating gas is higher than or equal to a predetermined value, open the exhaust valve (29) to release, via the exhaust valve (29), the circulating gas circulating in the circulating path (23), and
when the amount of water stored is larger than or equal to the predetermined value and the concentration of impurities is higher than or equal to the predetermined value, restrict opening of the exhaust valve (29) and open the drain valve (28) to drain, via the drain valve (28), the water stored in the gas-liquid separator (27) and the circulating gas flowing into the gas-liquid separator (27) to outside the circulating path (23).

2. The fuel cell system (1) according to claim 1, wherein the controller (50) is configured to
for a certain period of time just before the amount of water stored in the gas-liquid separator (27) reaches the predetermined value, open the exhaust valve (29) and measure a pressure reduction rate of the circulating gas circulating in the circulating path (23),
set a reference pressure reduction rate that is a reference for time to close the drain valve (28) based on the pressure reduction rate,
after the drain valve (28) is opened when the amount of water stored is larger than or equal to the predetermined value, measure the pressure reduction rate of the circulating gas circulating in the circulating path (23), and
close the drain valve (28) at time when the pressure reduction rate measured in a state where the drain valve (28) is open reaches the reference pressure reduction rate.

3. The fuel cell system (1) according to claim 1, further comprising a circulating pump (25) provided in the circulating path (23) and configured to circulate the circulating gas to the fuel cell stack (10), wherein
the controller (50) is configured to, when an electric power consumed by the circulating pump (25) is higher than or equal to a predetermined value, open the exhaust valve (29) to release, via the exhaust valve (29), the circulating gas and water contained in the circulating gas to outside the circulating path (23).

4. The fuel cell system (1) according to claim 3, wherein the controller (50) is configured to increase a pressure of hydrogen gas supplied to the fuel cell stack (10) in a state where the exhaust valve (29) is open.

## Patentansprüche

1. Brennstoffzellensystem (1) umfassend:
einen Brennstoffzellenstapel (10), dem Wasserstoffgas zugeführt wird;
einen Zirkulationspfad (23), der so konfiguriert ist, dass er aus dem Brennstoffzellenstapel (10) austretendes Wasserstoffabgas als Zirkulationsgas zum Brennstoffzellenstapel (10) zurückführt;
einen Gas-Flüssigkeitsabscheider (27), der in dem Zirkulationspfad (23) bereitgestellt wird, wobei der Gas-Flüssigkeitsabscheider (27) so konfiguriert ist, dass er in dem Zirkluationsgas enthaltenes Wasser aus dem Zirkulationsgas abscheidet und der Gas-Flüssigkeitsabscheider (27) so konfiguriert ist, dass er das abgeschiedene Wasser speichert;
ein Ablassventil (28), das konfiguriert ist, das in dem Gas-Flüssigkeitsabscheider (27) gespeicherte Wasser aus dem Zirkulationspfad (23) abfließen zu lassen;
ein Abgasventil (29), das konfiguriert ist, das Zirkulationsgas an einer dem Gas-Flüssigkeitsabscheider (27) nachgeschalteten Stelle aus dem Zirkulationspfad (23) nach außen abzulassen; und
eine Steuerung (50), die so konfiguriert ist, dass sie das Öffnen und Schließen des Ablassventils (28) und das Öffnen und Schließen des Abgasventils (29) regelt, wobei die Steuerung (50) konfiguriert ist, wenn eine in dem Gas-Flüssigkeitsabscheider (27) gesammelte Wassermenge größer oder gleich einem vorbestimmten Wert ist, das Ablassventil (28) öffnet, um das in dem Gas-Flüssigkeitsabscheider (27) gesammelte Wasser über das Ablassventil (28) abzulassen,
**dadurch gekennzeichnet, dass** die Steuerung (50) ferner für Folgendes konfiguriert ist:
wenn eine Konzentration von Unreinheiten, die in dem Zirkulationsgas enthalten sind, höher oder gleich einem vorbestimmten Wert ist, Öffnen des Abgasventils (29), um das Zirkulationsgas, das in dem Zirkulationspfad (23) zirkuliert, über das Abgasventil (29) abzulassen, und
wenn die gesammelte Wassermenge größer oder gleich dem vorbestimmten Wert und die Konzentration von Unreinheiten höher oder gleich dem vorbestimmten Wert sind, Begrenzen des Öffnens des Abgasventils (29) und des Öffnens des Ablassventils (28), um das in dem Gas-Flüssigkeitsabscheider (27) gesammelte Wasser über das Ablassventil (28) und das in dem Gas-Flüssigkeitsabscheider (27) fließende Zirkulationsgas aus dem Zirkulationspfad (23) abzulassen.

2. Brennstoffzellensystem (1) nach Anspruch 1, wobei die Steuerung (50) konfiguriert ist,
für eine bestimmte Zeit bevor die in dem Gas-Flüssigkeitsabscheider (27) gesammelte Wassermenge den vorbestimmten Wert erreicht, das Abgasventil (29) zu öffnen und eine Druckreduzierungsrate des Zirkulationsgases, das in dem Zirkulationspfad (23) zirkuliert, zu messen,
eine Referenz-Druckreduzierungsrate festzulegen, die eine Referenz für die Zeit zum Schließen des Ablassventils (28) basierend auf der Druckreduzierungsrate ist,
nach dem Öffnen des Ablassventils (28), wenn die gesammelte Wassermenge größer oder gleich dem vorbestimmten Wert ist, Messen der Druckreduzierungsrate des Zirkulationsgases, das in dem Zirkulationspfad (23) zirkuliert, und
Schließen des Ablassventils (28) jeweils, wenn die Druckreduzierungsrate, die in einem Zustand gemessen wird, in dem das Ablassventil (28) geöffnet ist, die Referenz-Druckreduzierungsrate erreicht.

3. Brennstoffzellensystem (1) nach Anspruch 1, ferner umfassend eine Zirkulationspumpe (25), die in dem Zirkulationspfad (23) bereitgestellt wird und so konfiguriert ist, dass sie das Zirkulationsgas in den Brennstoffzellenstapel (10) zirkuliert, wobei
die Steuerung (50) konfiguriert ist, wenn ein elektrischer Strom, der von der Zirkulationspumpe (25) verbraucht wird, höher oder gleich einem vorbestimmten Wert ist, Öffnen des Abgasventils (29), um das Zirkulationsgas und das Wasser, die in dem Zirkulationspfad enthalten sind, über das Abgasventil (29) aus dem Zirkulationspfad (23) abzulassen.

4. Brennstoffzellensystem (1) nach Anspruch 3, wobei die Steuerung (50) konfiguriert ist, einen Druck eines Wasserstoffgases, das dem Brennstoffzellenstapel (10) zugeführt wird, in einem Zustand, in dem das Abgasventil (29) geöffnet ist, zu steigern.

## Revendications

1. Système de pile à combustible (1), comprenant :
un empilement de pile à combustible (10) auquel du gaz hydrogène est fourni ;
un chemin de circulation (23) configuré pour faire circuler un gaz de dégagement hydrogène, émis depuis l'empilement de pile à combustible (10), vers l'empilement de pile à combustible (10), en tant que gaz de circulation ;
un séparateur gaz-liquide (27) prévu dans le chemin de circulation (23), le séparateur gaz-liquide (27) étant configuré pour séparer de l'eau, contenue dans le gaz de circulation, du gaz de circulation, le séparateur gaz-liquide (27) étant configuré pour stocker l'eau séparée ;
une soupape de drainage (28) configurée pour drainer l'eau stockée dans le séparateur gaz-liquide (27) vers l'extérieur du chemin de circulation (23) ;
une soupape d'évacuation (29) configurée pour libérer le gaz de circulation vers l'extérieur du chemin de circulation (23) à un emplacement en aval du séparateur gaz-liquide (27) ; et
une unité de commande (50) configurée pour commander l'ouverture et la fermeture de la soupape de drainage (28) et l'ouverture et la fermeture de la soupape d'évacuation (29), dans lequel l'unité de commande (50) est configurée pour, lorsqu'une quantité d'eau stockée dans le séparateur gaz-liquide (27) est supérieure ou égale à une valeur prédéterminée, ouvrir la soupape de drainage (28) pour drainer, par l'intermédiaire de la soupape de drainage (28), l'eau stockée dans le séparateur gaz-liquide (27),
**caractérisé en ce que** l'unité de commande (50) est en outre configurée pour :
lorsqu'une concentration d'impuretés contenues dans le gaz de circulation est supérieure ou égale à une valeur prédéterminée, ouvrir la soupape d'évacuation (29) pour libérer, par l'intermédiaire de la soupape d'évacuation (29), le gaz de circulation circulant dans le chemin de circulation (23), et
lorsque la quantité d'eau stockée est supérieure ou égale à la valeur prédéterminée et la concentration d'impuretés est supérieure ou égale à la valeur prédéterminée, limiter l'ouverture de la soupape d'évacuation (29) et ouvrir la soupape de drainage (28) pour drainer, par l'intermédiaire de la soupape de drainage (28), l'eau, stockée dans le séparateur gaz-liquide (27), et le gaz de circulation, s'écoulant dans le séparateur gaz-liquide (27), vers l'extérieur du chemin de circulation (23).

2. Système de pile à combustible (1) selon la revendication 1, dans lequel l'unité de commande (50) est configurée pour
pour un certain laps de temps juste avant que la quantité d'eau stockée dans le séparateur gaz-liquide (27) atteigne la valeur prédéterminée, ouvrir la soupape d'évacuation (29) et mesurer un taux de réduction de pression du gaz de circulation circulant dans le chemin de circulation (23),
régler un taux de réduction de pression de référence qui est une référence pour un temps pour fermer la soupape de drainage (28), sur la base du taux de réduction de pression,
après que la soupape de drainage (28) est ouverte lorsque la quantité d'eau stockée est supérieure ou égale à la valeur prédéterminée, mesurer le taux de réduction de pression du gaz de circulation circulant dans le chemin de circulation (23), et
fermer la soupape de drainage (28) à un temps auquel le taux de réduction de pression mesuré, dans un état où la soupape de drainage (28) est ouverte, atteint le taux de réduction de pression de référence.

3. Système de pile à combustible (1) selon la revendication 1, comprenant en outre une pompe de circulation (25) prévue dans le chemin de circulation (23) et configurée pour faire circuler le gaz de circulation vers l'empilement de pile à combustible (10), dans lequel
l'unité de commande (50) est configurée pour, lorsqu'une énergie électrique consommée par la pompe de circulation (25) est supérieure ou égale à une valeur prédéterminée, ouvrir la soupape d'évacuation (29) pour libérer, par l'intermédiaire de la soupape d'évacuation (29), le gaz de circulation et l'eau, contenue dans le gaz de circulation, vers l'extérieur du chemin de circulation (23).

4. Système de pile à combustible (1) selon la revendication 3, dans lequel l'unité de commande (50) est configurée pour augmenter une pression de gaz hydrogène fourni à l'empilement de pile à combustible (10), dans un état où la soupape d'évacuation (29) est ouverte.
